Europäisches Patentamt

European Patent Office

Office européen des brevets

(11) Veröffentlichungsnummer: **0 351 629 B1**

(12)

# EUROPÄISCHE PATENTSCHRIFT

(45) Veröffentlichungstag der Patentschrift: **15.09.93**

(51) Int. Cl.⁵: **B01D 11/02**, C08B 11/20

(21) Anmeldenummer: **89112153.5**

(22) Anmeldetag: **04.07.89**

(54) **Verfahren und Vorrichtung zum Abtrennen und Getrennthalten von unterschiedlichen Lösemitteln.**

(30) Priorität: **16.07.88 DE 3824147**

(43) Veröffentlichungstag der Anmeldung:
**24.01.90 Patentblatt 90/04**

(45) Bekanntmachung des Hinweises auf die
Patenterteilung:
**15.09.93 Patentblatt 93/37**

(84) Benannte Vertragsstaaten:
**BE DE FR IT NL SE**

(56) Entgegenhaltungen:
EP-A- 0 052 337
EP-A- 0 053 741
AT-A- 371 024
DE-A- 2 038 310
US-A- 2 667 482

(73) Patentinhaber: **HOECHST AKTIENGESELL-
SCHAFT**

**D-65926 Frankfurt(DE)**

(72) Erfinder: **Hilbig, Josef, Dr. (Diplom-Ingenieur)
Seifer Weg 3a
D-6204 Taunusstein(DE)**
Erfinder: **Welt, Günther, Dr.
(Diplom-Ingenieur)
Bahnhofstrasse, 36
D-6501 Gau-Bischofsheim(DE)**
Erfinder: **Ziegelmayer, Manfred
(Diplom.-Ingenieur)
Treburer Strasse 31
D-6094 Bischofsheim(DE)**

**Beschreibung**

Die vorliegende Erfindung betrifft ein vorzugsweise kontinuierlich betriebenes Verfahren und eine Vorrichtung zur Aufarbeitung unterschiedlicher Lösemittel, wie sie bei der Herstellung und Extraktion der verschiedensten Produkte, wie beispielsweise Celluloseethern, Verwendung finden bzw. anfallen. Unter Aufarbeitung soll hier und im folgenden die Behandlung von Materialien verstanden werden, bei denen unterschiedliche Lösemittel verwendet bzw. benutzt werden. Bei dem Verfahren und der Vorrichtung werden erfindungsgemäß die unterschiedlich verwendeten Lösemittel voneinander getrennt und getrennt gehalten. Im folgenden werden Verfahren und Vorrichtung weitgehend unter Bezugnahme auf die besonders bevorzugte Anwendung auf Celluloseether beschrieben.

Die Herstellung von Celluloseethern, wie beispielsweise Carboxymethylcellulose (CMC), Hydroxyethylcellulose (HEC), Hydroxypropylcellulose (HPC) oder Methylcellulose (MC) sowie deren Mischether in Anwesenheit eines Befeuchtungs- oder Suspendiermittels während der Veretherungsreaktion, ist bekannt. Dabei werden wäßrige, wäßrig-organische oder gemischt-organische Befeuchtungs- oder Suspendiermittel eingesetzt, deren Eigenschaften besonders günstig für die Veretherungsreaktion sind. Auch können Veretherungsmittel im Überschuß selbst als Befeuchtungs- oder Suspendiermittel dienen.

Die bei der Veretherungsreaktion entstandenen Reaktionsnebenprodukte (z. B. Salze) müssen zur Herstellung gereinigter Produkte anschließend aus dem Reaktionsprodukt entfernt werden. Dabei ist bekannt, daß das in der Reaktion verwendete Befeuchtungs- oder Suspendiermittel in der Regel nur ein geringes Salzlösevermögen aufweist und nicht wesentlich zur Reinigung des Celluloseethers beiträgt. Die Extraktion der Verunreinigungen aus dem Reaktionsprodukt wird deshalb mit einem dafür besser geeigneten Extraktionsmittel durchgeführt.

Nach der Reaktion wird das Befeuchtungs- oder Suspendiermittel vom Celluloseether abgetrennt. Für die Abtrennung werden unterschiedliche, kontinuierlich oder diskontinuierlich arbeitende Trennverfahren eingesetzt. Bekannt sind mechanische Trennapparate (z. B. Dekanter, Filter, Zentrifugen) oder Trockner (z. B. Vakuum-Schaufel-Trockner, inertisierte Stromtrockner). Bei heißwasserunlöslichen Celluloseethern kann das Befeuchtungs- bzw. Suspendiermittel in heißem Wasser ausgetrieben werden.

Bei den mechanischen Abtrennverfahren enthält der feuchte, rohe Celluloseether noch gewisse Anteile vom Befeuchtungs- bzw. Suspendiermittel. Dieser Anteil wird bei der Beaufschlagung bzw. Behandlung mit dem zur Extraktion besonders ausgesuchten zweiten Lösemittel oder Lösemittelgemisch vermischt, so daß im Anschluß an die Extraktion eine aufwendige destillative Trennung der Lösemittel für ihren Wiedereinsatz in der Veretherungsreaktion bzw. Extraktion notwendig wird.

Bei der Entfernung des Befeuchtungs- bzw. Suspendiermittels aus dem rohen Reaktionsprodukt durch Trocknung verhornen die Celluloseether-Partikel durch die Temperaturbehandlung. Die Verhornung verschließt die Oberfläche der Partikel, so daß bei der anschließenden Extraktion mit dem hierfür besonders ausgesuchten Lösemittel die Durchdringung mit dem Extraktionsmittel verschlechtert ist. Dies macht sich in einer verlängerten Extraktionszeit oder in einem größeren Lösemittelaufwand bemerkbar. Ein weiterer Nachteil der Zwischentrocknung des rohen Celluloseethers liegt darin, daß durch die Verhornung die Lösegüte des gereinigten Celluloseethers beeinträchtigt wird.

Im Falle der heißwasserlöslichen Celluloseether müssen bei Austreibung des Reaktionsmediums mit heißem Wasser anschließend die in das Wasser geratenen Anteile des Reaktionsmediums mit aufwendigen Methoden entfernt werden.

Verfahren und Vorrichtung der vorbeschriebenen Art sind beispielsweise aus der Literaturstelle "Proceedings of Filtration Society, Filtration and Separation, 1979, Seiten 176-180", sowie aus DE-B 20 38 310, EP-A 0 052 337 ( = US-A 4 398 024) und EP-A 0 053 741 ( = US-A 4 404 370) bekannt.

Mit den Verfahren und Vorrichtungen des Standes der Technik fallen die unterschiedlichen Lösemittel bei der Abtrennung jedoch als gemeinsames Lösemittelgemisch an, das abschließend erst getrennt wird.

Aufgabe der vorliegenden Erfindung ist es deshalb, ein Verfahren und eine Vorrichtung zu schaffen, mit deren Hilfe es möglich ist, die in den Verfahren eingesetzten unterschiedlichen Lösemittel zu separieren, wodurch die aufwendige nachträgliche Aufarbeitung eines Lösemittelgemisches entfällt.

Gelöst wird die vorstehend genannte Aufgabe durch ein vorzugsweise kontinuierliches Verfahren zum selektiven Abtrennen von bei der Herstellung und der Reinigung anfallenden chemisch oder in der physikalischen Zusammensetzung unterschiedlichen Lösemitteln, wobei man

a) von der lösemittelfeuchten Reaktionsmasse die Hauptmenge des Befeuchtungs- bzw. Suspendiermittels auf einen vorzugsweise umlaufenden Filter durch Abpressen bzw. Absaugen mechanisch abtrennt, wobei man das Extrakt getrennt auffängt,

b) danach auf dem gleichen Filter Wasserdampf in einer solchen Menge auf die noch Befeuchtungs- bzw. Suspendiermittel enthaltende Reaktionsmasse aufbringt, so daß das Befeuchtungs- bzw. Suspendiermittel weitgehend quantitativ aus der Reaktionsmasse entfernt wird, wobei man das Befeuchtungs- bzw. Suspendiermittel/Wasser-Gemisch getrennt auffängt,

c) danach auf dem gleichen Filter die Reaktionsnebenprodukte oder Verunreinigungen mit einem geeigneten Lösemittel oder -gemisch gegebenenfalls in mehreren Abschnitten extrahiert, wobei man das Extrakt getrennt auffängt,

d) danach die Hauptmenge des Extraktionsmittels durch Abpressen bzw. Absaugen mechanisch abtrennt, wobei man das Extrakt getrennt auffängt,

e) danach Wasserdampf in einer solchen Menge auf das noch Extraktionsmittel enthaltende Produkt aufbringt, so daß das Extraktionsmittel weitgehend quantitativ aus dem Produkt entfernt wird, wobei man das Extraktionsmittel/Wasser-Gemisch getrennt auffängt,

f) das gereinigte Produkt vom Filter abführt und gegebenenfalls trocknet.

Durch das Verfahren ist es somit möglich, die in den einzelnen Stufen anfallenden Befeuchtungs- bzw. Suspendiermittel sowie Extraktionsmittel separat aufzufangen, wodurch die nach den Verfahren und Vorrichtungen des Standes der Technik notwendige zeit- und kostenintensive Aufarbeitung des anfallenden Gemisches aus Befeuchtungs-/Suspendier-/Extraktionsmittel entfällt.

Das Verfahren wird vorzugsweise kontinuierlich betrieben, jedoch kann es auch stationär bzw. taktweise betrieben werden. Vorzugsweise wird bei dem Verfahren ein kontinuierlich umlaufendes Bandfilter eingesetzt.

Das Verfahren ist im allgemeinen so auszulegen, daß es bei der Aufbereitung und Reinigung von Produkten Anwendung findet, bei deren Herstellung und Extraktionsreinigung unterschiedliche Lösemittel verwendet werden. Es kann jedoch auch in einigen Fällen von Vorteil sein, wenn man zwar gleiche Lösemittel für die Suspension und die Extraktion benutzt, deren Gehalt an weiteren Bestandteilen, wie z. B. Wasser, jedoch unterschiedlich ist. Es besteht auch hier die Möglichkeit, die z. B. im Wassergehalt unterschiedlichen Lösemittel zu separieren und getrennt einem eventuell weiteren Einsatz zuzuführen. Das Verfahren ist grundsätzlich für die Aufarbeitung von allen Produkten anwendbar, bei denen vorzugsweise von der prozentualen Zusammensetzung her Unterschiede im Befeuchtungs- bzw. Suspendiermittel und Extraktionsmittel bestehen. Vorzugsweise wird das Verfahren jedoch bei der Aufarbeitung und Reinigung von Stärke- und ganz besonders bevorzugt von Celluloseethern eingesetzt.

Beispiele für üblicherweise verwendete Befeuchtungs- oder Suspendiermittel bei der Celluloseetherherstellung sind in der folgenden Tabelle aufgezeigt:

EP 0 351 629 B1

| Ether | Befeuchtungs-/ Suspendier- mittel | Extraktions- mittel |
|---|---|---|
| Carboxymethyl- cellulose (CMC) und Mischethern z. B. CMHEC: | Isopropanol<br><br>Dimethylglykol | Methanol<br>Ethanol<br>Ethanol |
| Hydroxyethylcellulose (HEC) | tert. Butanol<br>Isopropanol<br>Dimethylglykol | Aceton<br>Methanol |
| Methylcellulose (MC) Methylhydroxyethyl- cellulose (MHEC) Methylhydroxypropyl- cellulose (MHPC) und ähnliche Misch- ether | tert. Butanol<br>Dimethylglykol<br>Dimethylether | Heißwasser |
| Hydroxypropyl- cellulose (HPC) | tert. Butanol<br>Hexan<br>Toluol<br>gemischte KWS | Heißwasser |

Bei der besonders bevorzugten Aufarbeitung von Celluloseethern wird das Verfahren vor allem bei CMC im System Isopropanol (Befeuchtungs- bzw. Suspendiermittel), Methanol (Extraktionsmittel), bei HEC im System tert.

Butanol/Aceton oder Isopropanol/Methanol, bei MC im System Dimethylglykol/Heißwasser und bei HPC im System Dimethylglykol/Heißwasser angewendet.

Die Erfindung betrifft auch eine Vorrichtung zur Durchführung des Verfahrens. Die Vorrichtung ist dadurch gekennzeichnet, daß sie aus folgenden Vorrichtungsteilen besteht:

a) einer Filterunterlage 1
und hintereinander angeordnet

b) wenigstens einer ersten Einrichtung 2 zum mechanischen Entfernen des Befeuchtungs- bzw. Suspendiermittels,

c) wenigstens einer sich anschließenden Einrichtung 3 zum Aufbringen von Dampf,

d) einer Regeleinrichtung 4 zum Dosieren des Dampfes,

e) wenigstens einer sich anschließenden Einrichtung 6 zum Aufbringen des Extraktionsmittels,

f) wenigstens einer sich anschließenden Einrichtung 7 zur mechanischen Entfernung des Extraktionsmittels,

g) wenigstens einer sich anschließenden Einrichtung 8 zum Aufbringen von Dampf,

h) einer Regeleinrichtung 9 zur Dosierung des Dampfes,

i) getrennten Auffangwannen 21,22,23,24 und Behältern 11,12,13,14 zum Sammeln der Lösemittel aus den Einrichtungen.

Bevorzugt besteht die Filterunterlage aus einem Band- oder Scheibenfilter. Besonders haben sich kontinuierlich umlaufende Band- oder Drehfilter bewährt.

Um die mechanische Abtrennung des Befeuchtungs- oder Suspendiermittels bzw. des Extraktionsmittels zu beschleunigen, ist in den Einrichtungen 2 und/oder 7 wenigstens eine der Vorrichtungen 15,16,17,18 zur Erzeugung eines Über- bzw. Unterdrucks angeordnet. Der Überdruck kann beispielsweise durch die Druckaufgabe von Gasen oder in einfacher Weise durch sogenannte Abpreßbänder 15,17 erzeugt werden.

4

Der Unterdruck wird durch Anlegen eines Vakuums erzeugt. Bevorzugt wird gleichzeitig Über- und Unterdruck sowohl in der Einrichtung 2 als auch in der Einrichtung 7 angewendet. Die Einrichtungen besonders zum Bedampfen und/oder zur Aufgabe des Extraktionsmittels können je nach Erfordernis mehrfach hintereinander angeordnet sein. In besonders zweckmäßiger Ausführung werden die Einrichtungen 3 und 6 durch eine Trennwand 20 voneinander getrennt, um zu vermeiden, daß bei Anlegen eines Unterdrucks in der mechanischen Abtrennung das Extraktionsmittel in diese Zone eingesaugt wird, wodurch eine unerwünschte Vermischung der Lösemittel stattfinden würde.

Die Befeuchtungs-/Suspendier- bzw. Extraktionsmittel werden in den unterhalb der Filtereinrichtung in den jeweiligen Zonen befindlichen Wannen 21-24 aufgefangen und in die entsprechenden Sammelbehälter 11-14 abgeführt. Falls erwünscht, können auch die Filtrate aus der mechanischen Abtrennung und der Ausdämpfung bzw. der Extraktion und der Ausdämpfung vereinigt und dann gemeinsam aufgearbeitet bzw. weiterverwendet werden.

Das Verfahren und die entsprechende Vorrichtung sind auch dazu geeignet, die entsprechenden Lösemittel ohne vorherige Aufarbeitung direkt in neuerliche Reaktionsansätze bzw. zur Reinigung zurückzuführen.

Das erfindungsgemäße Verfahren und eine spezielle Vorrichtung werden im folgenden in Bezug auf die Aufbereitung von Celluloseethern dargestellt, wobei jedoch eine Einschränkung auf Celluloseether nicht bestehen soll, da - wie schon gesagt - Verfahren und Vorrichtung allgemein anwendbar sind.

Nach der Etherherstellung wird die gesamte Reaktionsmasse kontinuierlich auf ein umlaufendes Filter dosiert und die Hauptmenge des Befeuchtungs- bzw. Suspendiermittels mechanisch abgetrennt. Sofort daran anschließend wird auf dem gleichen Filter Wasserdampf in eingestellter Menge auf das noch lösemittelfeuchte Produkt aufgedüst. Der kondensierende Wasserdampf wird vom Filterkuchen adsorbiert und verdrängt daraus weitgehend quantitativ das restliche Befeuchtungs- bzw. Suspendiermittel.

Der auf dem Filter kontinuierlich weiterlaufende Filterkuchen wird in einem direkt anschließenden Abschnitt mit dem zweiten für die Extraktion besonders geeigneten Lösemittel bzw. heißem Wasser behandelt und dabei von den anhaftenden Reaktionsnebenprodukten (z. B. Salzen) befreit.

Direkt im Anschluß an die Reinigungszone wird durch erneute Dampfbehandlung auch das zweite Lösemittel - sofern nicht heißes Wasser - aus dem gereinigten Celluloseether weitgehend quantitativ entfernt. Der jetzt nur noch wasserfeuchte Celluloseether wird vom Filter abgenommen und kann über bekannte Verfahren (Wassertrocknung, Mahlung, Siebung) konfektioniert werden.

Das im ersten Filterabschnitt mechanisch und durch den adsorbierten Wasserdampf abgetrennte Befeuchtungs- bzw. Suspendiermittel enthält in der Regel wenig Salz und Wasser. Durch das erfindungsgemäße Verfahren ist es nicht mit dem zweiten zur Extraktion verwendeten Lösemittel oder heißem Wasser vermischt und kann dadurch direkt wieder zur Reaktion eingesetzt werden.

Das zur Extraktion verwendete Lösemittel bzw. heiße Wasser ist seinerseits nicht mit dem zur Reaktion verwendeten Befeuchtungs- bzw. Suspendiermittel verunreinigt und kann damit einer einfachen Aufarbeitung zugeführt werden.

Durch das erfindungsgemäße kontinuierliche Verfahren ist es erstmals möglich, die für die Reaktion und Extraktion günstigsten Lösemittel/Lösemittelgemische auf einer Apparatur weitgehend quantitativ zu trennen, so daß die aufwendige Aufarbeitung dieser Lösemittel/Lösemittelgemische für ihren Wiedereinsatz vermieden wird, ohne daß eine Produktschädigung infolge einer Zwischentrocknung in Kauf genommen werden müßte.

Als kontinuierliche Filter kommen vorzugsweise Bandfilter, aber auch Drehfilter, Trommelfilter u.ä. - auch in druckfester Ausführung - in Frage.

Im folgenden speziellen Beispiel wird eine besonders bevorzugte Aufarbeitung von Carboxymethylcellulose beschrieben.

Bei der Herstellung einer hochveretherten und hochviskosen CMC (DS = 0,9; Viskosität in 2%iger Lösung 30.000 mPas) wurde eine Reaktionsmaische erhalten, die außer CMC noch etwa 5 Gew.-% NaCl, etwa 0,5 Gew.-% Na-Glykolat, etwa 13,2 Gew.-% Wasser und etwa 64,4 Gew.-% Isopropanol enthält.

Von dieser Reaktionsmasse wurden 35,7 kg/h auf ein umlaufendes Filterband dosiert. Nach der Abpressung bei 2 erfolgte die erste Dampfbehandlung bei 3. Die auf den Filterkuchen aufgegebene Dampfmenge betrug 6 kg/h.

Das in einer Menge von 28,55 kg/h aus der Reaktionsmasse ablaufende Suspendiermittel hatte folgende Zusammensetzung:

80,5 Gew.-% Isopropanol,

0,2 Gew.-% NaCl,

19,3 Gew.-% Wasser.

Natriumglykolat konnte analytisch nicht nachgewiesen werden. Der Isopropanolgehalt im Filterkuchen nach dieser ersten Dampfbehandlung wurde analytisch unter 0,1 Gew.-% gefunden.

Der vom Lösemittel befreite salzhaltige Filterkuchen gelangte kontinuierlich in die Extraktionszone 6 und wurde dort mit 70%igem wäßrigen Methanol extrahiert, das in einer Menge von 36 kg/h aufgegeben wurde. Nach der Extraktion wurde der methanolhaltige Filterkuchen durch Absaugen, Abpressen und Bedampfen mit 6 kg/h Dampf vom Methanol befreit und vom Band abgeworfen. Das aus der Extraktion und Ausdämpfzone ablaufende gesammelte Lösemittel betrug 42,16 kg/h und hatte eine Zusammensetzung von 59,7 Gew.-% Methanol, 4,1 Gew.-% NaCl, 0,4 Gew.-% Natriumglykolat und 35,7 Gew.-% Wasser. Der analytisch nachweisbare Isopropanolgehalt im methanolischen Ablauf lag unter 0,1 Gew.-%.

Im folgenden wird schematisch eine Vorrichtung in einfachster Ausführung dargestellt, ohne daß auch hier die gezeigte Ausführungsform eine Einschränkung darstellt.

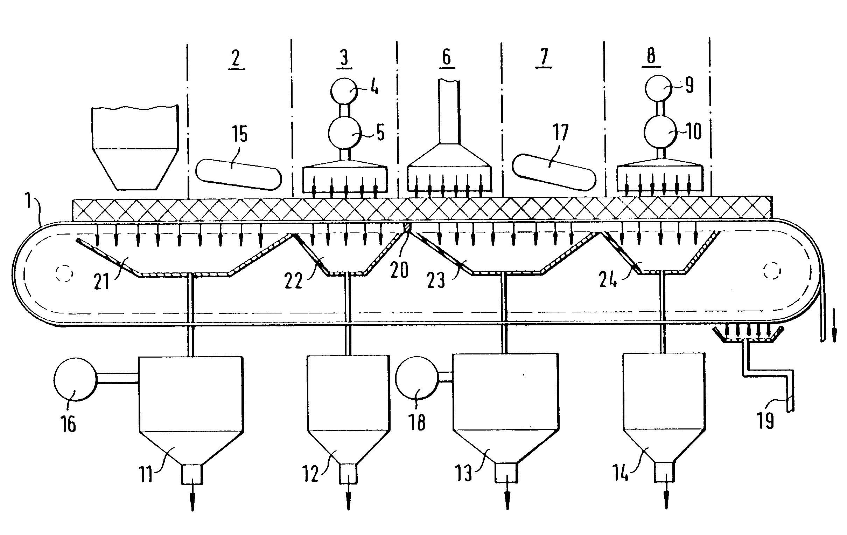

In der Figur ist ein umlaufendes Bandfilter 1 dargestellt, an dessen Anfang das Befeuchtungs- bzw. Suspendiermittel enthaltende Produkt (Kreuzdarstellung) aufgegeben wird. Das Befeuchtungs- bzw. Suspendiermittel wird durch die Einrichtung 2 mechanisch entfernt, wobei man sich eines Abpreßbandes 15 und über den Sammelbehälter 11 der Vakuumeinrichtung 16 bedient. Das Befeuchtungs- bzw. Suspendiermittel wird in der Auffangwanne 21 gesammelt und in den Sammelbehälter 11 abgeführt. Anschließend ist eine Einrichtung 3 angeordnet, die aus einer Haube besteht, die mit einem Dampferzeuger 5 und einer Regeleinrichtung 4 zur Steuerung der Dampfbeaufschlagung verbunden ist. Das anfallende Befeuchtungs-/Suspendiermittel/Wasser-Gemisch wird in der Wanne 22 aufgefangen und in den Sammelbehälter 12 abgeführt. An diese Einrichtung kann selbstverständlich ebenfalls eine Vakuumeinrichtung angeschlossen werden, die jedoch hier nicht geeignet ist. In der Einrichtung 6 wird das Extraktionsmittel aufgegeben und in der Einrichtung 7 das Material durch das Abpreßband 17 mechanisch unter Anlegen eines durch 18 erzeugten Vakuums abgepreßt. Das Extraktionsmittel wird in der Wanne 23 gesammelt und in den Sammelbehälter 13 abgeführt. Zwischen den Einrichtungen 3 und 6 ist eine Trennwand 20 angeordnet, die verhindert, daß das bei 3 anfallende Gemisch in den Extraktionsteil eingesaugt wird. In der Einrichtung 8 wird anschließend wieder Dampf aufgegeben. Der durch die Einrichtung 10 erzeugte Dampf wird über die Regeleinrichtung 9 gesteuert und über eine Haube auf das Material aufgebracht. Das Extraktionsmittel-Wasser-Gemisch wird in der Wanne 24 gesammelt und in den Sammelbehälter 14 abgeführt. Auch in dieser Einrichtung kann selbstverständlich eine Vakuumeinrichtung (hier nicht gezeigt) angeschlossen werden. Nach dem Austrag des gereinigten Produkts können Trocken- und Granuliereinrichtungen angeschlossen werden, jedoch ist es auch möglich, z. B. die Trocknung direkt hinter der Einrichtung 8 anzuschließen, bevor das Produkt ausgetragen wird.

Das umlaufende Bandfilter wird zweckmäßig vor der Neubeaufschlagung mit Material durch die Reinigungsanlage 19 gesäubert. Dies erfolgt z. B. durch Aufgabe von Wasser oder Lösemittel unter Druck.

**Patentansprüche**

1. Verfahren zum selektiven Abtrennen von bei der Herstellung und der Reinigung von Produkten anfallenden chemisch oder in der physikalischen Zusammensetzung unterschiedlichen Lösemitteln, wobei man

a) von der lösemittelfeuchten Reaktionsmasse die Hauptmenge des Befeuchtungs- bzw. Suspendiermittels auf einem Filter durch Abpressen bzw. Absaugen mechanisch abtrennt, wobei man das Extrakt getrennt auffängt,

b) danach auf dem gleichen Filter Wasserdampf in einer solchen Menge auf die noch Befeuchtungs- bzw. Suspendiermittel enthaltende Reaktionsmasse aufbringt, so daß das Befeuchtungs- bzw. Suspendiermittel weitgehend quantitativ aus der Reaktionsmasse entfernt wird, wobei man das Befeuchtungs- bzw. Suspendiermittel/Wasser-Gemisch getrennt auffängt,

c) danach auf dem gleichen Filter die Reaktionsnebenprodukte oder Verunreinigungen mit einem geeigneten Lösemittel oder -gemisch gegebenenfalls in mehreren Abschnitten extrahiert, wobei man das Extrakt getrennt auffängt,

d) danach die Hauptmenge des Extraktionsmittels durch Abpressen bzw. Absaugen mechanisch abtrennt, wobei man das Extrakt getrennt auffängt,

e) danach Wasserdampf in einer solchen Menge auf das noch Extraktionsmittel enthaltende Produkt aufbringt, so daß das Extraktionsmittel weitgehend quantitativ aus dem Produkt entfernt wird, wobei man das Extraktionsmittel/Wasser-Gemisch getrennt auffängt,

f) das gereinigte Produkt vom Filter abführt und gegebenenfalls trocknet.

EP 0 351 629 B1

**2.** Verfahren nach Anspruch 1, dadurch gekennzeichnet, daß man es kontinuierlich auf einem umlaufenden Band- oder Drehfilter durchführt.

**3.** Verfahren nach einem der Ansprüche 1 oder 2, dadurch gekennzeichnet, daß man es bei der Aufarbeitung von Stärke- oder Celluloseether durchführt.

**4.** Verfahren nach Anspruch 3, dadurch gekennzeichnet, daß man es bei der Aufarbeitung von CMC, HEC, HPC, MC, MHEC und Mischethern durchführt.

**5.** Verfahren nach Anspruch 4, dadurch gekennzeichnet, daß es bei CMC im System Isopropanol/Methanol, bei HEC im System tert. Butanol/Aceton oder Isopropanol/Methanol, bei MC im System Dimethylglykol/Heißwasser und bei HPC im System Dimethylglykol/Heißwasser durchführt.

**6.** Vorrichtung zur Durchführung des Verfahrens nach einem der Ansprüche 1 bis 5, gekennzeichnet durch folgende Vorrichtungsteile:
a) eine Filterunterlage (1)
und oberhalb dieser Filterunterlage hintereinander angeordnet
b) eine erste Einrichtung (2) zum mechanischen Entfernen des Befeuchtungs- bzw. Suspendiermittels,
c) eine sich anschließende Einrichtung (3) zum Aufbringen von Dampf mit
d) einer Regeleinrichtung (4) zur Dosierung des Dampfes,
e) eine sich anschließende Einrichtung (6) zum Aufbringen des Extraktionsmittels,
f) eine sich anschließende Einrichtung (7) zur mechanischen Entfernung des Extraktionsmittels,
g) eine sich anschließende Einrichtung (8) zum Aufbringen von Dampf mit
h) einer Regeleinrichtung (9) zur Dosierung des Dampfes,
i) getrennte, unterhalb der Filterunterlage befindliche Auffangwannen (21,22,23,24) und damit verbundene Behälter (11,12,13,14) zum Sammeln der Lösemittel aus den jeweiligen Einrichtungen sowie
j) eine Einrichtung zum Abführen des gereinigten Produktes

**7.** Vorrichtung nach Anspruch 6, dadurch gekennzeichnet, daß die Filterunterlage ein kontinuierlich bewegtes Filter ist.

**8.** Vorrichtung nach Anspruch 7, dadurch gekennzeichnet, daß die Filterunterlage ein kontinuierlich umlaufendes Band- oder Drehfilter ist.

**9.** Vorrichtung nach einem der Ansprüche 6 bis 8, dadurch gekennzeichnet, daß wenigstens in den Einrichtungen (2) und/oder (7,8) Vorrichtungen zur Erzeugung eines Über- und/oder Unterdrucks vorhanden sind.

**10.** Vorrichtung nach einem der Ansprüche 6 bis 9, dadurch gekennzeichnet, daß die Einrichtungen mehrfach hintereinander angeordnet sind.

**11.** Vorrichtung nach einem der Ansprüche 6 bis 10, dadurch gekennzeichnet, daß wenigstens zwischen den Einrichtungen (3) und (6) eine Trennwand (20) angeordnet ist.

**Claims**

**1.** A process for selectively separating solvents differing chemically or in physical composition, obtained in the preparation and purification of products, in which process
a) the bulk of the moistening or suspending agent is separated off mechanically from the solvent-moist reaction mass on a filter by pressing or suction, the extract being collected separately,
b) an amount of steam sufficient to remove the moistening or suspending agent substantially quantitatively from the reaction mass is then applied on the same filter to the reaction mass, which still contains moistening or suspending agent, the moistening or suspending agent/water mixture being collected separately,
c) the byproducts of the reaction or impurities are then extracted on the same filter with a suitable solvent or solvent mixture, if appropriate in several stages, the extract being collected separately,

7

EP 0 351 629 B1

d) the bulk of the extraction agent is then separated off mechanically by pressing or suction, the extract being collected separately,

e) an amount of steam sufficient to remove the extraction agent substantially quantitatively from the product is then applied to the product, which still contains extraction agent, the extraction agent/water mixture being collected separately, and

f) the purified product is removed from the filter and, if desired, dried.

2. The process as claimed in claim 1, wherein it is carried out continuously on a circulating band filter or rotary filter.

3. The process as claimed in one of claims 1 or 2, wherein it is carried out in working up starch or cellulose ether.

4. The process as claimed in claim 3, wherein it is carried out in working up CMC, HEC, HPC, MC, MHEC and mixed ethers.

5. The process as claimed in claim 4, wherein it is carried out in the case of CMC in the system isopropanol/methanol, in the case of HEC in the system tert.-butanol/acetone or isopropanol/methanol, in the case of MC in the system dimethylglycol/hot water and in the case of HPC in the system dimethylglycol/hot water.

6. A device for carrying out the process as claimed in one of claims 1 to 5, which comprises the following parts:

a) a filter base (1),
and, arranged successively above this filter base,
b) a first appliance (2) for mechanically removing the moistening or suspending agent,
c) an adjacent appliance (3) for the application of steam, having
d) a control appliance (4) for metering the steam,
e) an adjacent appliance (6) for applying the extraction agent;
f) an adjacent appliance (7) for mechanically removing the extraction agent,
g) an adjacent appliance (8) for the application of steam, having
h) a control appliance (9) for metering the steam,
i) separate collecting troughs (21,22,23 and 24), located below the filter base, and vessels (11,12,13 and 14) connected thereto for collecting the solvents from the respective appliances, and
j) an appliance for removing the purified product.

7. The device as claimed in claim 6, wherein the filter base is a continuously moving filter.

8. The device as claimed in claim 7, wherein the filter base is a continuously circulating band filter or rotary filter.

9. The device as claimed in one of claims 6 to 8, wherein devices for producing an excess and/or reduced pressure are present, at least in appliances (2) and/or (7 and 8).

10. The device as claimed in one of claims 6 to 9, wherein a plurality of the appliances are arranged in succession.

11. The device as claimed in one of claims 6 to 10, wherein a partition (20) is arranged, at least between appliances (3) and (6).

**Revendications**

1. Procédé pour séparer sélectivement des solvants, différents chimiquement ou par leur composition physique et qui apparaissent lors de la préparation et de la purification de produits ,selon lequel :

(a) on sépare mécaniquement sur un filtre,par expression ou succion ,de la masse réactionnelle humectée par du solvant, la majeure partie du milieu d'humidification ou de suspension , en recueillant séparément l'extrait,

8

(b) puis l'on applique sur le même filtre,sur la masse réactionnelle contenant encore du milieu d'humidification ou de suspension, une quantité de vapeur d'eau telle que le milieu d'humidification ou de suspension est dans une large mesure enlevé quantitativement de la masse réactionnelle, en recueillant séparément le mélange milieu d'humidification ou de suspension / eau ,

(c) puis l'on extrait sur le même filtre les sous-produits de réaction ou les impuretés,avec un solvant ou avec un mélange convenable de solvants ,en opérant éventuellement en ou sur plusieurs fractions , en recueillant séparément l'extrait,

(d) puis l'on sépare mécaniquement par expression ou suc-la majeure partie du milieu utilisé pour l'extraction,en recueillant séparément l'extrait

(e) puis l'on applique sur le produit,contenant encore de l'agent d'extraction, une quantité de vapeur d'eau telle que l'agent d'extraction est dans une large mesure enlevé quantitativement du produit, en recueillant séparément le mélange agent d'extraction/eau ,

(f) on retire du filtre le produit purifié et on le sèche éventuellement .

2. Procédé selon la revendication 1 ,caractérisé en ce qu'on l'éxécute en continu sur une bande filtrante tournant sans fin ou sur un filtre rotatif .

3. Procédé selon l'une des revendications 1 ou 2,caractérisé en ce qu'on le met en oeuvre lors du traitement de purification d'éther d'amidon ou d'éther de cellulose .

4. Procédé selon la revendication 3 ,caractérisé en ce qu'on le met en oeuvre lors du traitement de purification de CMC ( carboxyméthylcellulose), de HEC (hydroxyéthylcellulose) de HPC ( (hydroxypropylcellulose), de MC (méthylcellulose), de MHEC ( méthylhydroxyéthylcellulose) et d'éthers mixtes.

5. Procédé selon la revendication 4 , caractérisé en ce qu'on le met en oeuvre pour de la CMC dans un système isopropanol/méthanol pour de la HEC dans un système tert.-butanol/acétone ou isopropanol/méthanol, pour de la MC dans un système diméthylglycol/eau chaude et pour de la HPC dans un système diméthylglycol/eau chaude .

6. Dispositif pour l'éxécution du procédé selon l'une des revendications 1 à 5, caractérisé par la présence des parties constitutives suivantes :

(a) une installation (1) de base pour filtration et,disposés successivement au dessus de cette installation de base:

(b) une première installation (2) pour enlever mécaniquement le milieu d'humidification ou de suspension ,

(c) une installation (3) adjacente pour appliquer de la vapeur d'eau , avec ,associé à cette installation (3)

(d) un appareillage de régulation (4) pour la commande de l'apport dosé de vapeur d'eau,

(e) une installation (6) adjacente pour appliquer l'agent d'extraction ,

(f) une installation (7) adjacente pour enlever mécaniquement l'agent d'extraction,

(g)une installation (8) adjacente pour appliquer de la vapeur d'eau ,avec,associé à cette installation (8)

(h) un appareillage de régulation (9) pour la commande de l'apport dosé de vapeur d'eau,

(i) des cuvettes (21, 22, 23 ,24) de recueil séparé,se trouvant sous l'installation de base pour filtration et associees chacune à un récipient (11,12,13,14) respectif pour collecter le solvant des diverses installations, ainsi que

(j) un dispositif pour enlever le produit purifié .

7. Dispositif selon la revendication 6, caractérisé en ce que l'installation de base pour filtration est un filtre animé d'un mouvement continu .

8. Dispositif selon la revendication 7 , caractérisé en ce que l'installation de base pour filtration est un filtre à bande sans fin tournant en continu ou est un filtre rotatif.

9. Dispositif selon l'une des revendications 6 à 8 , caractérisé en ce qu'il y a au moins dans les installations (2) et/ou (7,8) des appareillages pour la production d'une surpression et/ou d'une dépression.

**10.** Dispositif selon l'une des revendications 6 à 9 , caractérisé en ce que les installations sont disposées plusieurs fois l'une derrière l'autre .

**11.** Dispositif selon l'une des revendications 6 à 10, caractérisé en ce qu'une cloison de séparation (20) est disposée au moins entre les installations (3) et (6) .